(19) Europäisches Patentamt / European Patent Office / Office européen des brevets

(11) **EP 4 283 811 A1**

(12) **EUROPÄISCHE PATENTANMELDUNG**

(43) Veröffentlichungstag:
**29.11.2023 Patentblatt 2023/48**

(21) Anmeldenummer: **22175508.5**

(22) Anmeldetag: **25.05.2022**

(51) Internationale Patentklassifikation (IPC):
*H02J 3/14* (2006.01)    *H02J 3/38* (2006.01)
*G06Q 30/06* (2023.01)    *G06Q 50/06* (2012.01)
*H02J 3/00* (2006.01)    *H02J 3/32* (2006.01)
*H02J 13/00* (2006.01)

(52) Gemeinsame Patentklassifikation (CPC):
**H02J 3/14; G06Q 30/0605; G06Q 50/06;**
**H02J 3/381;** H02J 3/003; H02J 3/004; H02J 3/32;
H02J 13/00004; H02J 2203/10; H02J 2300/24;
H02J 2300/28; H02J 2310/10

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Schreck, Sebastian**
 **90439 Nürnberg (DE)**
• **Thiem, Sebastian**
 **91413 Neustadt an der Aisch (DE)**
• **Wagner, Lisa**
 **90768 Fürth (DE)**

(74) Vertreter: **Siemens Patent Attorneys**
**Postfach 22 16 34**
**80506 München (DE)**

(54) **VERFAHREN ZUM BETREIBEN EINES ENERGIESYSTEMS, COMPUTERPROGRAMM UND ELEKTRONISCH LESBARER DATENTRÄGER**

(57) Die Erfindung betrifft ein Verfahren zum Betreiben eines Energiesystems, ein Computerprogramm sowie einen elektronisch lesbaren Datenträger

## FIG 1

**Beschreibung**

Die Erfindung betrifft ein Verfahren zum Betreiben eines Energiesystems, in welchem ein Energienetz mehrere Komponenten für eine Übertragung von Energie verbindet, gemäß dem Patentanspruch 1. Ferner betrifft die Erfindung ein Computerprogramm gemäß dem Patentanspruch 10 sowie einen elektronisch lesbaren Datenträger gemäß dem Patentanspruch 11.

In einem lokalen Energiesystem, beispielsweise in einem Stadtviertel oder einer Gemeinde, befinden sich in der Regel mehrere verschiedene Energiesubsysteme. Solch ein Energiesubsystem beziehungsweise solch eine Komponente kann beispielsweise ein einzelnes Gebäude mit verschiedenen energietechnischen Anlagen, beispielsweise Aggregate zur Energieerzeugung beziehungsweise Umwandlung, Verbraucher - wie Klimaanalagen - und/oder Speicheranlagen, sein.

Bei regenerativen Erzeugern, wie beispielsweise Photovoltaikanlagen, welche Sonnenenergie in elektrische Energie umwandeln, können witterungsbedingt eine starke Fluktuation beziehungsweise starke Schwankungen an bereitgestellter Leistung auftreten.

Die einzelne Komponente kann über ein Energiemanagementsystem verfügen. Ferner bekannt sind lokale Energiemärkte. So zeigt die DE 10 2018 221 156 A1 ein Verfahren zur Steuerung von Energieflüssen zwischen Komponenten eines Energiesystems.

Aufgabe der vorliegenden Erfindung ist es, ein Verfahren, ein Computerprogramm sowie einen Datenträger bereitzustellen, durch welche ein Energiesystem mit mehreren Komponenten derart betrieben wird, dass ein flexibler Ausgleich von Leistungsschwankungen durch die Komponenten kompensiert werden kann, um so eine Belastung elektrischer Bauteile des Energiesystem besonders gering zu halten.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren zum Betreiben eines Energiesystems. In dem Energiesystem sind über ein Energienetz mehreren Komponenten für eine Übertragung von Energie verbunden und die Komponenten umfassen jeweils wenigstens eine Anlage, welche jeweils einen Erzeuger beziehungsweise Umwandler und/oder einen Verbraucher und/oder einen Speicher von Energie umfasst. Zum Berteiben des Energiesystems umfasst das erfindungsgemäße Verfahren mehrere Schritte:
In einem ersten Schritt erfolgt ein Erfassen von Angebotswerten, wobei ein jeweilige der Angebotswerte durch eine der Komponenten bereitgestellt wird und die von dieser Komponente pro erstem Zeitintervall, beispielsweise 24 Stunden beziehungsweise ein Tag, bereitstellbare und/oder gebrauchte Energiemenge und/oder deren Flexibilität beschreibt beziehungsweise charakterisiert, wobei das Erfassen durch eine zentrale Steuerungseinrichtung geschieht.

In einem zweiten Schritt erfolgt ein Bestimmen einer möglichen Auslastung des Energiesystems für ein zweites Zeitintervall anhand der Angebotswerte durch die zentrale Steuerungseinrichtung.

In einem dritten Schritt erfolgt ein Ermitteln eines jeweiligen Flexibilitätswertes, welcher eine verfügbare Flexibilität der jeweiligen Energiemenge der Komponente anhand wenigstes eines Umgebungswertes charakterisiert.

In einem vierten Schritt erfolgt ein Erfassen einer tatsächlichen beziehungsweise aktuell durch die jeweilige Komponente, insbesondere zur Umverteilung an das Energienetz, bereitgestellte Leistung für die mehreren Komponenten, insbesondere zum aktuellen Zeitpunkt.

In einem fünften Schritt erfolgt ein Ermitteln einer Differenz zwischen einer Summe der erfassten Leistungen und einem Leistungs-Sollwert beziehungsweise ein Ermitteln einer Abweichung der summierten Leistung von einem Sollwert der Leistung.

In einem sechsten Schritt erfolgt ein Bereitstellen eines Steuersignals, welches von der Differenz und der Flexibilität abhängt, durch die Steuerungseinrichtung für wenigstens eine der Komponenten, wobei das Steuersignals dazu dient, einen Energieaustausch und/oder eine Energieregulierung über das Energienetz zu initiieren. Somit kann ein jeweiliges Steuersignal durch die Steuerungseinrichtung für die jeweilige Komponente bereitgestellt werden, wodurch im Rahmen der verfügbaren Flexibilität einen Energieaustausch und/oder eine Energieregulierung über das Energienetz initiiert wird. Durch den Energieaustausch beziehungsweise die Energieregulierung kann somit insbesondere die jeweilige Komponente und/oder das Energienetz besonders geschont werden.

Mit anderen Worten erfolgt in den Schritten eins und zwei ein zentraler Abgleich beziehungsweise ein zentrales Matching durch die zentrale Steuereinrichtung, welche somit einen Überblick über die Komponenten, welche an das Energienetz des Energiesystems angeschlossen sind, erhält. Dabei kann die zentrale Steuereinrichtung beispielsweise ein System eines lokalen Energiemarkts darstellen. In dem ersten Schritt erfolgt somit ein Erfassen eines jeweiligen Angebotswerts, beziehungsweise eines Gebots, welcher beziehungsweise welches eine verfügbare und/oder verbrauchbare, flexible oder unflexible Energiemenge, welche dem Energienetz zugeführt beziehungsweise dem Energienetz durch die jeweilige Komponente bereitgestellt wird, charakterisiert. In dem zweiten Schritt erfolgt ein Erfassen einer verfügbaren und/oder verbrauchbaren Energiemenge des Energiesystems für ein zweites Zeitintervall, welches gleich oder insbesondere kleiner dem ersten Zeitintervall ist, anhand der Angebotswerte.

Im dritten Schritt erfolgt im Wesentlichen eine Berechnung der freien Flexibilität, in dem eine insbesondere theoretische abrufbare, freie Flexibilität unter einer Einhaltung des Umgebungswerts, welcher technische und/oder ökonomische Grenzen beschreibt, berechnet wird.

Die Schritte eins bis drei, also der zentrale Abgleich und die Berechnung der freien Flexibilitäten, werden insbesondere durchgeführt bevor tatsächlich durch die Komponente eine Energiemenge beziehungsweise eine Leistung, also eine Energiemenge pro Zeit bereitgestellt, wird. Die Energiemenge und somit die Leistung kann sowohl einen negativen als auch einen positiven Wert aufweisen. So stellt ein Verbraucher quasi eine negative Energiemenge bereit, da er die Energie verbraucht.

Die Schritte vier bis sechs umfassen im Wesentlichen eine Regelung während der Lieferung der jeweiligen Leistung beziehungsweise Energiemenge. In dem vierten Schritt kann insbesondere durch Messgeräte der Komponenten und/oder ein extra Messgerät, welches nicht Teil einer der Komponenten ist, die tatsächlich aktuell an das Energienetz bereitgestellte beziehungsweise von dort abgerufene Energiemenge beziehungsweise Leistung erfasst werden. Dabei wird eine Summe der einzelnen Leistungen gebildet und/oder die Summenleistung, insbesondere durch das extra Messgerät, erfasst. Die Summenbildung erfolgt vorteilhafterweise durch die zentrale Recheneinrichtung, sodass der aktuelle Gesamtverbrauch beziehungsweise die benötigten Energiemenge beziehungsweise Energie pro Zeit - die Leistung - abgeglichen wird. Der Abgleich erfolgt mittels des Sollwerts, welcher beispielsweise eine Maximalleistung für das Energienetz beziehungsweise Energiesystem beschreibt.

Sollte die ermittelte Summe der aktuell bereitgestellten Leistung davon abweichen, erfolgt nun die Generierung des Steuersignals, insbesondere in Echtzeit, sodass dadurch wenigstens eine der jeweiligen Komponenten gesteuert werden kann, was zu einer Glättung durch die Flexibilitäten führt, sodass die tatsächlich bereitgestellte Leistung an den Sollwert angeglichen wird.

Vorteilhaft kann das Zusammensummieren beziehungsweise Summe bilden als Pseudomessung aufgefasst werden, sodass eine Gesamtleistung insbesondere beispielsweise an einem kritischen Netzbetriebsmittel des Energiesystems, wie beispielsweise ein neben den Komponenten zusätzlich installierten Transformator, vorteilhaft gebildet werden kann.

Dabei liegt der Erfindung die Erkenntnis zugrunde, dass an lokalen Energiemärkten gehandelte Produkte meist vor einem tatsächlichen Lieferzeitpunkt für eine festgelegte Zeitperiode, beispielsweise 1 Stunde und/oder 15 Minuten, gehandelt werden. Bei einem lokalen Energiesystem, beispielsweise in einem Stadtviertel, welches darüber hinaus eine hohe Durchdringung von variablen Erzeugern, wie beispielsweise Photovoltaikanlagen aufweist, entsteht das Problem, dass extreme Schwankungen in kurzen Zeitabschnitten, beispielsweise im Sekunden- beziehungsweise im Minutenbereich, auftreten können. Diese Schwankungen liegen somit nicht im Zeitbereich der gehandelten Produkte, von beispielsweise eine Stunde oder 15 Minuten, und müssen oder können somit während der Lieferung beziehungsweise dem Bereitstellen der Leistung nicht mehr ausgeglichen werden. Für den Energiemarkt stellt das in der Regel kein Problem dar, da nur eine Gesamtenergiemenge während der Lieferperiode für die Abrechnung der gelieferten Energiemenge relevant ist.

Jedoch können diese Schwankungen in der Einspeisung zu Betriebsmittelüberlastung, beispielsweise an Transformatoren, und/oder zu unzulässigen elektronischen Grenzwerten, meistens Spannungen und/oder einer Reduktion der Lebensdauer von Bauteilen, beispielsweise an regelbaren Ortsnetz-Transformatoren, führen.

Das Problem konnte bisher nur auf Komponentenseite gelöst werden, sobald die Komponente über ein Energiemanagementsystem verfügt, welches beispielsweise in der Lage ist, einen Leistungseinbruch einer der Anlagen der Komponente zu erfassen und zu regeln. Umfasst die Komponente mehrere Anlagen, beispielsweise eine Grundlast, eine Batterie und einen Erzeuger, wie die Photovoltaikanlage, könnte bei einem Einbruch der Leistung der Photovoltaikanlage die Batterie entladen werden, um die fehlende Leistung, insbesondere an einem Netzanschluss, zu kompensieren. Ist das konventionelle Energiemanagementsystem an den lokalen Energiemarkt angebunden, würde die Kompensation nur in dem Fall erfolgen, dass das Energiemanagementsystem dafür entlohnt wird. Daher ist im Stand der Technik ein insbesondere unflexibler Verbraucher und/oder Erzeuger nicht in der Lage weder auf Vorhersageunsicherheiten noch auf plötzlich auftretende Schwankungen zu reagieren.

Durch das erfindungsgemäße Verfahren kann nun beispielsweise der lokale Energiemarkt so erweitert werden, dass eine Variabilität auf Erzeugungs- und Verbraucherseite ausgeglichen werden kann, um so eine Belastung der elektrischen Komponenten beziehungsweise von Bauteilen des Energienetzes zu kompensieren. So ist ein Vorteil des Verfahrens eine Entlastung von Betriebmitteln des Energiesystems. Ferner ist ein Vorteil, dass auf ein kostenintensives Bereitstellen zusätzlicher Speicher verzichtet werden kann, da vorhanden Speicher besonders effizient zum Abfedern der Variabilität eingesetzt werden können.

In vorteilhafter Ausgestaltung der Erfindung wird das Bestimmen der Auslastung mittels Methoden eines Optimierungsprogramms gelöst. Mit anderen Worten wird aufgrund der abgegebenen Gebote beziehungsweise Angebotswerte durch ein insbesondere lineares Optimierungsproblem die Auslastung gematched beziehungsweise abgeglichen. Dabei ist das zweite Zeitintervall insbesondere kürzer als das erste Zeitintervall ist. Also Algorithmus des Optimierungsproblems wird beispielsweise der soziale Wohlfahrtalgorithmus verwendet. Durch Ermitteln der Auslastung anhand eines Optimierungsproblems ergibt sich der Vorteil, dass die Auslastung besonders effizient und/oder besonders präzise ermittelt werden kann.

In weiterer vorteilhafter Ausgestaltung der Erfindung umfasst der jeweilige Angebotswert beziehungsweise einer der Angebotswerte einen oberen Grenzwert und/oder einen unteren Grenzwert für die Energiemenge. Zusätzlich oder alternativ umfasst der jeweilige Angebotswert beziehungsweise einer der Angebotswerte einen Kapazitätswert, welcher insbesondere eine Speichergröße einer Anlage der Komponente charakterisiert, und/oder einen Wirkungsgradwert insbesondere des Speichers und/oder eine Zeitfunktion und/oder einen Gegenwert. Mit anderen Worten beschreibt der Angebotswert eine maximal bereitzustellende Energiemenge. Dabei wird sowohl eine negative als auch eine positive Energiemenge angeboten. Ist ein Verbrauch beziehungsweise eine Erzeugung der Energiemenge verschiebbar, wird insbesondere eine Zeitfunktion mit in dem Angebotswert abgegeben. Ferner kann der Angebotswert nicht nur das Bereitstellen oder Verbrauchen von Energie, sondern deren Speicherung umfassen. Daher kann beispielsweise ein Wirkungsgrad und/oder ein Kapazitätswert des Speichers angegeben werden. Ferner kann ein Gegenwert, welcher einem Energiepreis entsprechen kann, angegeben werden.

Vorteilhafterweise kann der jeweilige Angebotswert über die zentrale Steuerungseinrichtung zusätzlich an einem lokalen Energiemarkt präsentiert werden. Umfasst eine Komponente eine Ladestation für ein Elektroauto und soll dieses innerhalb der nächsten zwölf Stunden geladen werden, ist jedoch der Zeitpunkt innerhalb der zwölf Stunden egal, kann dies durch den Angebotswert ausgedrückt werden. Ferner ergibt sich der Vorteil, dass anhand des Angebotswerts besonders vorteilhaft der zentrale Abgleich durch das Verfahren durchgeführt werden kann.

In weiterer vorteilhafter Ausgestaltung der Erfindung wird ein Lieferwert anhand der möglichen Auslastung für das zweite Zeitintervall bestimmt. Mit anderen Worten wird durch die zentrale Steuerungseinrichtung ein Liefervertrag vorgegeben, welcher beschreibt, welche Komponente welche Energiemenge im zweiten Zeitintervall benötigt und/oder bereitstellt. Während der Lieferung kann beispielsweise für unflexible Gebote keine Anpassung einer bezogenen beziehungsweise bereitgestellten Leistung erfolgen. Für flexible Angebotswerte können entsprechende Anlagen der Komponente während dem Bereitstellen, insbesondere während des zweiten Zeitintervalls angepasst werden. Die Anpassung erfolgt dabei im Rahmen technischer Restriktionen, beispielsweise Speicherfüllstand oder maximale Leistung. Dadurch ergibt sich der Vorteil, dass das Verfahren besonders vorteilhaft in den lokalen Energiemarkt integriert werden kann. Ein weiterer Vorteil ist, dass das Energiesystem besonders effizient betrieben werden kann, da durch Bestimmung der Auslastung Rückschlüsse auf den Lieferwert und umkehrt ermöglicht sind.

In weiterer vorteilhafter Ausgestaltung der Erfindung wird das jeweilige Steuersignal in Abhängigkeit von dem Lieferwert und/oder von der Flexibilität wenigstens einer der Anlagen wenigstens einer der Komponenten bereitgestellt. Mit anderen Worten wird das Steuersignal generiert beziehungsweise in seine Höhe, Art, Form und/oder Größe beeinflusst, dabei wird bei dem Steuersignal beispielsweise die Volatilität eine der Anlagen der wenigstens einen Komponente berücksichtigt. Zusätzlich oder alternativ wird der Lieferwert, welcher beschreibt, wie groß eine Auslastung zu einem Zeitpunkt insbesondere für das zweite Zeitintervall in dem Netz ist, berücksichtigt. Dadurch ergibt sich der Vorteil, dass das Steuerungssignal besonders vorteilhaft ausgegeben werden kann, wodurch eine Glättung der Flexibilitäten beziehungsweise eine Abweichung der Leistung vom Sollwert besonders vorteilhaft ausgeglichen werden kann.

In weiterer vorteilhafter Ausgestaltung der Erfindung weist die jeweilige Komponente ein Energiemanagementsystem auf, durch welches der jeweilige Angebotswert und/oder ein Wert für die tatsächliche Leistung bereitgestellt wird beziehungsweise werden. Mit anderen Worten verfügt die jeweilige Komponente über ein eigenes Energiemanagementsystem, welches insbesondere dazu ausgebildet ist, die wenigstens eine Anlage innerhalb der Komponente zu koordinieren, um beispielsweise über einen Netzanschlusspunkt, über welchem die Komponente mit dem Energienetz verbunden ist, die Leistung vorteilhaft bereitzustellen. Ferner kann eine weitere Schnittstelle vorgesehen sein, über welche sich das Energiemanagementsystem und die zentrale Steuerungseinrichtung austauschen können. So kann mittels des Energiemanagementsystems auf besonders vorteilhafte Weise das Steuerungssignal empfangen und dieses umgesetzt werden. Dadurch kann das Energiesystem besonders vorteilhaft betrieben werden.

In weiterer vorteilhafter Ausgestaltung der Erfindung umfasst der Umgebungswert eine Restriktion wenigstens einer der Anlagen einer der Komponenten und/oder des Energienetzes und/oder der Komponente. Mit anderen Worten charakterisiert der Umgebungswert technische Eigenschaften wenigstens einer der Anlagen und/oder einer der Komponenten und/oder des Energienetzes, sodass der Umgebungswert beispielsweise eine Leistungsgrenze oder eine Belastungsgrenze des Energienetzes oder dergleichen vorgibt. Zusätzlich oder alternativ kann der Umgebungswert auch eine Nachfrage an Energiemenge von weiteren Komponenten im Energiesystem umfassen. Dadurch ergibt sich der Vorteil, dass der Umgebungswert besonders vorteilhaft zum Ermitteln des Flexibilitätswerts verwendet werden kann.

In weiterer vorteilhafter Ausgestaltung der Erfindung umfasst das Energiesystem eine Messeinrichtung, welche insbesondere an einer Wandlereinrichtung angeordnet ist und insbesondere kein Bauteil einer der Komponenten darstellt. Mit anderen Worten kann die Messeinrichtung beispielsweise an einem Transformator, welcher ein kritisches Netzbetriebsmittel darstellt, angeordnet sein, um eine Gesamtleistung in dem Energienetz zu erfassen. Insbesondere wenn nicht alle Teilnehmer beziehungsweise Komponenten im Netzgebiet exklusiv durch den lokalen Energiemarkt beliefert werden, kann eine zusätzliche Messung am Transformator eingesetzt werden, um beispielsweise einen Abfluss an Energie und/oder Zufluss an Energie in beziehungsweise aus einem Verteilernetz, Anschlusspunkt oder dergleichen zu erfassen und für das Verfahren auswertbar zu machen.

In weiterer vorteilhafter Ausgestaltung der Erfindung wird das Energiesystem über eine Schnittstelle mit dem Verteilernetz verbunden und/oder über die Schnittstelle übertragbare Leistung wird beim Ermitteln des Flexibilitätswerts und/oder des Sollwerts einbezogen. Mit anderen Worten wird wenigstens eine an ein Verteilnetz abgebbare und/oder beziehbare Energiemenge bei dem Verfahren berücksichtigt, sodass darüber eventuell abgebbare und/oder aufnehmbare Leistung, insbesondere bei Bildung des wenigstens einen Steuerungssignals, berücksichtigt werden kann. Dadurch ergibt sich der Vorteil, dass das Energiesystem besonders vorteilhaft betrieben werden kann.

Ein zweiter Aspekt der Erfindung umfasst ein Computerprogramm. Das Computerprogramm kann beispielsweise in einem Speicher der elektronischen Recheneinrichtung einer Presse geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

FIG 1      schematische Ansicht eines Energiesystems umfassend ein Energienetz, welches mehrere Komponenten für eine Übertragung von Energie verbindet, wobei das Energiesystem durch ein Verfahren betrieben wird;

FIG 2      schematische Diagramme einer Erzeugerleistung einer Photovoltaik Anlage in Abhängigkeit einer Wolkenbildung;

FIG 3      schematisches Diagramm einer Leistungsregelung durch ein Verfahren zum Betreiben des Energiesystems der Fig. 1; und

FIG 4      schematische Diagramme einer Leistung des Energiesystems, welches ohne und mit dem Verfahren betrieben wird.

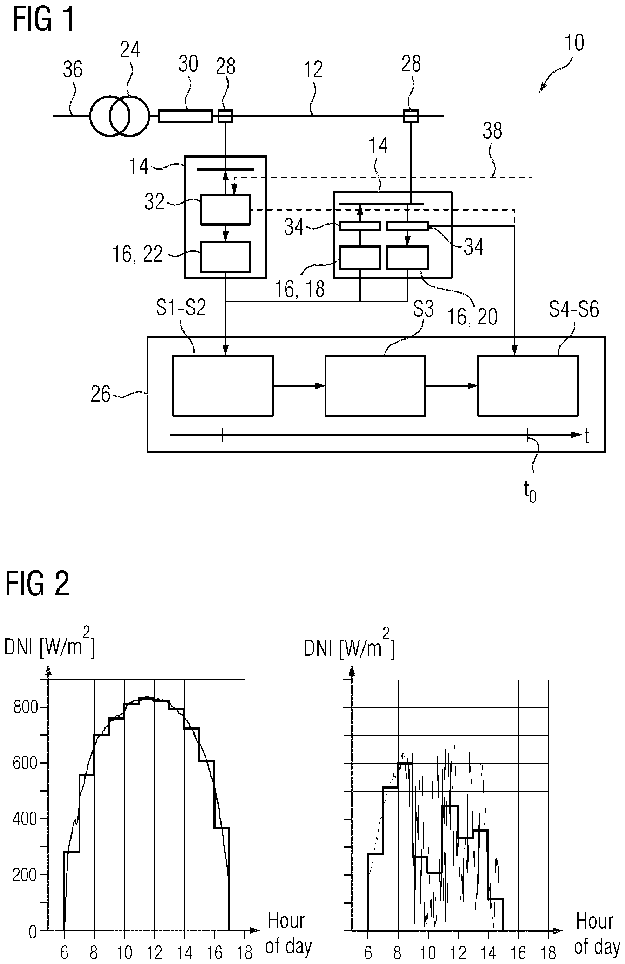

Fig. 1 zeigt in einer schematischen Ansicht ein Energiesystem 10, in welchem ein Energienetz 12 mehrere Komponenten 14 für eine Übertragung von Energie verbindet und die Komponenten 14 jeweils wenigstens eine Anlage 16 umfassen, welche jeweils einen Erzeuger 18 beziehungsweise Umwandler und/oder einen Verbraucher 20 und/oder einen Speicher 22 von Energie umfasst.

Bei dem Energiesystem 10 kann es sich beispielsweise um ein Netz mit Netzteilnehmern einer Gemeinde und/oder eines Stadtteils handeln. Die einzelnen Komponenten 14 sind beispielsweise Gebäude beziehungsweise Haushalte und/oder Industrieeinrichtungen. Die jeweilige Anlage 16 kann beispielsweise ein Aggregat sein. Beispielsweise der Erzeuger 18 eine Photovoltaikanlage und/oder eine Windkraftanlage umfassen. Der Verbraucher 20 ist beispielsweise eine Klima- und/oder Heizungsanlage. Bei dem Speicher 22 kann es sich beispielsweise um einen Hochvoltspeicher, wie eine Batterie handeln. Im Folgenden soll ein Verfahren zum Betreiben des Energiesystems 10 vorgestellt werden, welches mehrere Schritte umfasst.

In einem ersten Schritt S1 erfolgt ein Erfassen von Angebotswerten, wobei ein jeweiliger der Angebotswerte durch eine der Komponenten 14 bereitgestellt wird und die von dieser Komponente 14 pro erstem Zeitintervall, beispielsweise einem Tag, bereitstellbare und/oder gebrauchte Energiemenge und/oder deren Flexibilität beschreibt, wobei das Erfassen durch eine zentrale Steuerungseinrichtung 26 erfolgt. Dabei ist die hier beschriebene bereitstellbare beziehungsweise gebrauchte Energiemenge jeweils über einen Netzanschlusspunkt 28 des Energiesystems zwischen Komponente 14 und Energienetz 12 übermittelbar beziehungsweise übertragbar.

In einem zweiten Schritt S2 erfolgt ein Bestimmen einer möglichen Auslastung des Energiesystems 10 für ein zweites beziehungsweise das zweite Zeitintervall anhand der Angebotswerte durch die zentrale Steuerungseinrichtung 26.

In einem dritten Schritt erfolgt ein Ermitteln eines jeweiligen Flexibilitätswertes, welcher eine verfügbare Flexibilität der Energiemenge der jeweiligen Komponenten 14 anhand wenigstens eines Umgebungswertes charakterisiert.

In einem vierten Schritt S4 erfolgt ein Erfassen einer aktuell durch die jeweilige Komponente 14 zur Verteilung an das Energienetz 12 bereitgestellten Leistung für die mehreren Komponenten 14, insbesondere zum Lieferzeitpunkt beziehungsweise zum aktuellen Zeitpunkt.

In einem fünften Schritt S5 erfolgt ein Ermitteln einer Differenz beziehungsweise einer Abweichung zwischen einer Summe der erfassten Leistungen von einem Leistungs-Sollwert beziehungsweise einem Sollwert der Leistung. Somit erfolgt ein Vergleich der summierten Leistungen mit dem Sollwert.

In einem sechsten Schritt S6 erfolgt ein Bereitstellen eines jeweiligen Steuersignals 38 durch die Steuerungseinrichtung 26 für die jeweilige Komponente 14, wodurch in Rahmen der verfügbaren Flexibilität einen Energieaustausch und/oder eine Energieregulierung über das Energienetz 12 initiiert wird, wodurch auf vorteilhafte Weise eine Glättung der Energiemenge auch für kurze Zeitintervalle ermöglicht werden kann. Dabei soll das Verfahren ein bekanntes Problem lösen. So ergibt es sich, dass in lokalen Energiesystemen, wie dem Energiesystem 10 beispielsweise in einem Stadtviertel verschiedene Energiesubsysteme, die Komponenten 14 mit jeweils verschiedenen energietechnischen Anlagen 16 vorhanden sind. Eine möglichst effiziente Allokation der im Gesamtsystem erzeugten und/oder verbrauchten Energie sowie ein Austausch innerhalb des Energienetzes 12 unterliegt im Grunde einem zentralen Optimierungsproblem beziehungsweise einem Koordinierungsproblem.

Im Stand der Technik ergibt es sich, dass jedes Energiesubsystem beziehungsweise jede Komponente 14 nur Kenntnis über seine eigenen technischen Ausgestaltungen, insbesondere in Form der Anlagen 16 aufweist.

Vorteilhaft wäre eine zentrale Koordinierungsplattform zum optimierten Austausch zwischen den Komponenten 14 und dem Energienetz 12. So eine Koordinierungsplattform kann durch einen lokalen Energiemarkt abgebildet werden, bei welchem Produkte, insbesondere verfügbare Energie, meist vor dem tatsächlichen Lieferzeitpunkt für eine feste Zeitperiode gehandelt wird.

Durch die zentrale Steuerungseinrichtung 26 kann das gezeigte Energiesystem 10 als lokaler Energiemarkt betrachtet werden, sodass durch die jeweilige Komponente Angebote abgegeben werden können und ihre jeweilige Komponente 14 als Teilnehmer des lokalen Energiemarkts aufgefasst werden kann. Bei den Geboten, welche dann letztendlich die Angebotswerte des vorgestellten Verfahrens charakterisieren, kann grundsätzlich zwischen unflexiblen Geboten, beispielsweise Grundlast oder Photovoltaikerzeugung und flexiblen Angeboten, beispielsweise dem Ladevorgang eines Elektroautos, Einspeisung eines Generators und/oder Speichergeboten, dem Bereitstellen und Einlagern der Energien in einem Energiespeichers unterschieden werden. Dabei unterscheidet man im Wesentlichen fünf Gebotstypen. Eine einfache Sell-Order für einen Verkauf, eine einfache Buy-Order für einen Einkauf, jeweils einer maximalen Energiemenge. Des Weiteren gibt es verschiedene Flexibilitätsangebote, beispielsweise für eine Storage-Order, bei welcher eine maximal bereitgestellte Speicherkapazität angeboten wird und eine initiale Speicherladung vorgegeben wird, wobei ein Lade- und Entladewirkungsgrad des Speichers vorgegeben werden. Ferner gibt es ein Flexibilitätsangebot als Flex-Buy-Order, bei welcher beispielsweise beim Laden eines Elektroautos für einen gewissen Zeitraum eine gewisse Energiemenge angefordert wird, wobei es egal ist, wann die Energiemenge beziehungsweise die Leistung während des Zeitintervalls abgerufen wird. Das Gleiche existiert als Flex-Sell-Order, wenn eine Energiemenge beziehungsweise Leistung angeboten werden soll.

So umfasst der jeweilige Angebotswert vorteilhafterweise einen oberen Grenzwert und/oder einen unteren Grenzwert für die Energiemenge. Zusätzlich oder alternativ umfasst der eine Kapazitätswert und/oder eine Wirkungsgrad und/oder eine Zeitfunktion und/oder einen Gegenwert.

Bei solch einem Energiemarkt spielt es jedoch keine Rolle, ob eine extreme Schwankung der Leistung beziehungsweise Energiemenge im Sekunden- oder Minutenbereich bei beispielsweise einer der Anlagen 16 auftritt. Jedoch ist ein Problem, dass solche Schwankungen bei der Einspeisung in das Energienetz 12 beziehungsweise beim Betrieb des Energiesystem 10 zu Betriebsmittelüberlastungen, unzulässigen elektronischen Grenzwerten und/oder eine Reduktion der Lebensdauer der Komponenten 14 oder weiterer Komponenten, wie beispielsweise einem Transformator 24, führen können.

Durch das gezeigte Verfahren kann eine Schonung der Bestandteile des Energiesystems 10 ermöglicht werden.

Fig. 2 zeigt im linken Diagramm eine Direktnormalstrahlung an einem sonnigen Tag. Das rechte Diagramm der FIG 2 zeigt die Direktnormalstrahlung an einem bewölkten Tag, wobei jeweils zusätzlich für den Vergleich stündliche Mittelewerte eingezeichnet sind. Dabei kann, obwohl die stündlichen Mittelwerte am wolkigen Tag keine starken Schwankungen aufweisen, trotzdem innerhalb einer Handelsperiode beziehungsweise des zweiten Zeitintervalls eine starke Schwankung beziehungsweise Über- oder Untereinspeisung auftreten.

Das hier vorgestellte Verfahren löst das beschriebene Problem durch flexiblen Ausgleich von starken Schwankungen beziehungsweise Einhalten von Leistungsgrenzen innerhalb einer Lieferperiode beziehungsweise eines Zeitintervalls von einem lokalen Energiemarkt.

Dabei ist es vorteilhaft, wenn die Bestimmung der Auslastung mittels Methodens eines Optimierungsproblems gelöst wird. Ferner kann das Energiesystem 10 ein Messgerät 30 umfassen, welche insbesondere dem Transformator 24 zugeordnet sein kann. Dabei ist es des Weiteren vorteilhaft, dass die jeweilige Komponente 14 ein Energiemanagementsystem 32 aufweist, durch welches der jeweilige Angebotswert und/oder ein Wert für die tatsächliche Leistung bereitgestellt werden. Das jeweilige Energiemanagementsystem 32 kann ein weiteres Messgerät 34 zum Messen der jeweiligen Leistung und/oder Energiemenge aufweisen.

Darüber hinaus kann das Energiesystem 10 über eine Schnittstelle 36 mit einem Verteilnetz verbunden sein und über die Schnittstelle 36 Leistungen übertragen werden. Dies für das Ermitteln des Flexibilitätswerts und/oder für den Leistung-Sollwert bei der Durchführung des Verfahrens einbezogen werden.

So wird bei dem Verfahren insbesondere mit den Schritten S1 und S2 ein zentrales Matching beziehungsweise eine zentrale Anpassung durchgeführt. So werden beispielsweise für einen Tag, das erste Zeitintervall, abgegebene Gebote, die Angebotswerte durch ein lineares Optimierungsproblem, beispielsweise anhand maximaler sozialer Wohlfahrt, gematched und daraus Lieferverträge beziehungsweise wenigstens ein Lieferwert für das zweite Zeitintervall, beispielsweise ein 15 Minuten-Intervall, erstellt. So kann anhand der Auslastung ein Lieferwert für das zweite Zeitintervall bestimmt werden.

Die Angebotswerte können flexible oder unflexible Energiemengen zum Bereitstellen umfassen. In dem zweiten Zeitintervall kann eine Energiemenge eines unflexiblen Angebots nicht angepasst werden, hingegeben bei einem flexiblen Angebot schon. Diese jeweilige Anpassung kann jedoch nur im Rahmen technischer Restriktionen, beispielsweise Speicherkapazitäten und dergleichen erfolgen. So ist in vorteilhafter Ausgestaltung des Verfahrens bei dem Umgebungswert eine Restriktion wenigstens einer der Anlagen 16 eine der Komponenten 14 und/oder des Energienetzes 12 und/oder einer der Komponenten 14 berücksichtigt.

Ferner ist vorteilhafte für das Verfahren, dass der jeweilige Angebotswert einen oberen Grenzwert und/oder einen unteren Grenzwert für die Energiemenge umfasst. Zusätzlich oder alternativ umfasst der Angebotswert einen Kapazitätswert, und/oder einen Wirkungsgrad und/oder eine Zeitfunktion und/oder einen Gegenwert, welcher beispielsweise einen Angebotspreis charakterisiert.

Der Schritt S3 des Verfahrens charakterisiert im Wesentlichen die Berechnung der freien Flexibilität. Bei diesem wird die theoretisch abrufbare freie Flexibilität beziehungsweise die abrufbaren freien Flexibilitäten unter der Einhaltung von technischen und/oder ökonomischen Grenzen berechnet. Die Leistung $P^{SB}_{contracted,t}$ kann beispielsweise als Basiswert gesehen werden, mit dem die jeweilige Anlage zu Beginn des Zeitintervalls betrieben wird.

Für flexible Erzeuger 18 gilt für das zweite Zeitintervall (15 Minuten) für positive Flexibilität als eine Erhöhung der Leistung:

$$P^S_{flex+,t} = P^S_{max,t} - P^S_{contracted,t}$$

Für negative Flexibilität und eine Absenkung der Leistung gilt:

$$P^S_{flex-,t} = P^S_{contracted,t}$$

Für flexible Verbraucher 20 gilt für jedes Zeitintervall für positive Flexibilität und Absenkung der Leistung:

$$P^S_{flex+,t} = P^B_{contracted,t}$$

Für negative Flexibilität und somit eine Erhöhung der Leistung Formel 4:

$$P^B_{flex-,t} = P^B_{max,t} - P^B_{contracted,t}$$

Für einen Speicher 22 gelten, mit $E^{st,SOC}_t$ als Speicherfüllstand ableitbar beispielsweise aus einem Speichervertrag:

$$P^{ST}_{flex+,t} = \min \left( (E^{st,SOC}_t - E^{BAT}_{min})/ \Delta t_t, \; P^{BAT}_{dch,max} \cdot \eta_{dch} \right)$$

$$P_{flex-,t}^{ST} = \min \; (\; (E_{max}^{BAT} - E_t^{st,SOC})/\Delta t_t, \; P_{ch,max}^{BAT}/\eta_{ch})$$

Die Schritte S4 bis S6 des Verfahrens beschreiben eine Regelung während der Lieferung beziehungsweise Bereitstellung der Leistung beziehungsweise einer Energiemenge im zweiten Zeitintervall durch Variabilitätsausgleich.

Dabei werden alle Messdaten aller Handelsteilnehmer, also Daten der Messgeräte 34 der Komponenten 14 und/oder des Messgeräts 30 insbesondere kontinuierlich durch die zentrale Steuerungseinrichtung 26 gesammelt, wobei die zentrale Steuerungseinrichtung 26 in dem lokalen Energiemarkt beispielsweise eines Verteilnetzbetreibers angeordnet sein kann. Durch das Sammeln kann der Summenwert P$_{mess}$ der Messgeräte 30 und 34 und insbesondere eine Pseudomessung der Gesamtleistung an einem kritischen Netzbetriebsmittel, beispielsweise dem Transformator 24, gebildet werden. Werden nicht alle Teilnehmer im Netzgebiet exklusiv durch den lokalen Energiemarkt beliefert, kann für eine zusätzliche Messung, das Messegerät 30 am Transformator 24 eingesetzt werden.

Um starke Schwankungen beziehungsweise Überlastung vorteilhaft ausgleichen zu können, kann beispielsweise vom Verteilnetzbetreiber der Sollwert P$_{soll}$ beziehungsweise Leistung-Sollwert P$_{soll}$ insbesondere mit einem Toleranzband vorgegeben werden. Alternativ kann der Sollwert aus der Summe aller Verträge aller Teilnehmer errechnet werden, spricht aus den Angebotswerten und/oder den Leistungswerten. Dieser Sollwert kann als Eingabe beziehungsweise Input zur Regelung der flexiblen Anlagen 16 der Komponenten 14 dienen, da durch ein Errechnen des Marktergebnisses die Flexibilitäten der einzelnen Anlagen 16 zu jeden Zeitschritt bekannt sind, können nun bei einer Abweichung von Mess- und Sollwert die flexiblen Anlagen 16 Leistungen aufnehmen beziehungsweise abgeben, um die Variabilität auszugleichen.

Die nötige Gesamtleistung P$_{flex}$ kann entweder gewichtet auf alle flexiblen Anlagen 16 aufgeteilt und/oder kostenbasiert ermittelt werden.

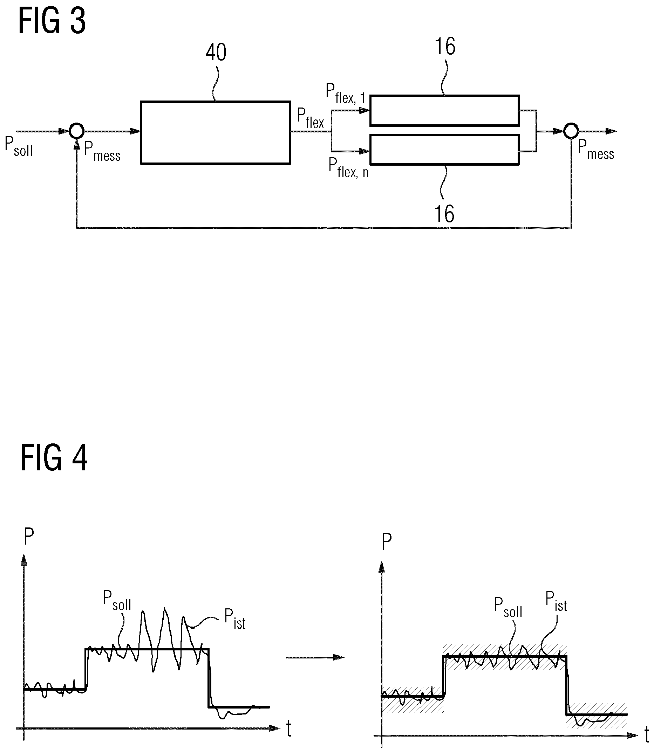

Fig 3 den Variabilitätsausgleich anhand zweier flexibler Anlagen 16, die durch eine PID-Regler 40 gesteuert beziehungsweise geregelt werden können. Wobei der Variabilitätsausgleich in Abhängigkeit von P$_{soll \; und}$ P$_{mess}$ erfolgt.

FIG 4 zeigt im linken Diagramm Leistungsspitzen des Ist-Werts die auftreten, wenn kein Variabilitätsausgleich durchgeführt wird, da das Verfahren nicht angewandt wird, im Vergleich zum Sollwert. Das rechte Diagramm der Fig 4

Das Toleranzband ist beispielweise die schraffierte Fläche im rechten Diagramm der FIG 4.

Das rechte Diagramm der FIG 4 zeigt, dass die Leistungsspitzen des Ist-Werts bei Anwendung des Verfahrens innerhalb des Toleranzbands liegen, wodurch auf besonders vorteilhafte Bauteile beziehungsweise die Komponenten 14 und das Energienetz 12 des Energiesystems 10 geschont werden können.

Das beschriebene Verfahren kann zum einen für den gesamten lokalen Energiemarkt zur Verringerung der Variabilität und/oder Überlastung von Netzbetriebsmitteln durchgeführt werden. Weiterhin kann dadurch ein Ausgleich von Vorhersagefehlern von einzelnen Komponenten 14 verringert werden. Ferner können über den lokalen Energiemarkt hinaus Probleme im lokalen Netzgebiet vermieden werden, da durch eine Gesamtmessung am Transformator 24 auch Überlastungen verursacht durch andere Komponenten 14 ausgeglichen werden können.

Ferner ergeben sich aus dem vorgestellten Verfahren weitere Vorteile. Eine Belastung des Netzbetriebs wird vermieden, die Erweiterung des lokalen Energiemarkts ermöglicht dem Betreiber den optimalen Betrieb des lokalen Energiesystems 10 und einen Ausgleich der Variabilität auf Verteilnetzebene wird ebenfalls ermöglicht. Ein weiterer Vorteil ist, dass durch den Einsatz der vorgeschlagenen lokalen Regelung auf einen kostenintensiven Einbau zusätzlicher Speicher zum Variabilitätsausgleich verzichtet werden kann. Schließlich können zusätzlich zu einem Erlös aus dem lokalen Handel, die Speicher 22 und flexible Anlagen 16 zusätzlich für netzdienliches Verhalten entlohnt werden.

Das hier vorgestellte Verfahren kann auf einer elektronischen Recheneinrichtung beispielsweise der Steuerungseinrichtung 26 als Computerprogramm ausgeführt werden und/oder auf der einzelnen Verfahrensschritte Handlungen zur einzelnen Verfahrensschritte auf einer elektronischen Speichereinrichtung abgebildet werden. Das Verfahren, das Computerprogramm und der Datenträger sind jeweils eine Möglichkeit einen vorteilhaften Variabilitätsausgleich von volatilen Einspeisungen durch einen lokalen Energiemarkt zu ermöglichen.

Bezugszeichenliste

10   Energiesystem
12   Energienetz
14   Komponente
16   Anlage
18   Erzeuger
20   Verbraucher
22   Speicher

24    Transformator
26    Steuerungseinrichtung
28    Netzanschlusspunkt
30    Messgerät
32    Energiemanagementsystem
34    weiteres Messgerät
36    Schnittstelle
38    Steuersignal
40    PID-Regler
S1    erster Schritt
S2    zweiter Schritt
S3    dritter Schritt
S4    vierter Schritt
S5    fünfter Schritt
S6    sechster Schritt


**Patentansprüche**

1. Verfahren zum Betreiben eines Energiesystems (10), in welchem ein Energienetz (12) mehrere Komponenten (14) für eine Übertragung von Energie verbindet und die Komponenten (14) jeweils wenigstens eine Anlage (16) umfassen, welche jeweils einen Erzeuger (18) und/oder einen Verbraucher (20) und/oder einen Speicher (22) von Energie umfasst, mit den folgenden Schritten:

   - Erfassen von Angebotswerten, wobei ein jeweiliger der Angebotswerte durch eine der Komponenten (14) bereitgestellt wird und die von dieser Komponente (14) pro erstem Zeitintervall bereitstellbare und/oder gebrauchte Energiemenge und/oder deren Flexibilität beschreibt, durch eine zentrale Steuerungseinrichtung (26); (S1)
   - Bestimmen einer möglichen Auslastung des Energiesystems (10) für ein zweites Zeitintervall anhand der Angebotswerte durch die zentrale Steuerungseinrichtung (26); (S2)
   - Ermitteln eines jeweiligen Flexibilitätswertes, welcher eine verfügbare Flexibilität der Energiemenge der jeweiligen Komponenten (14) anhand wenigstens eines Umgebungswertes charakterisiert; (S3)
   - Erfassen einer aktuell durch die jeweilige Komponente (14) bereitgestellten Leistung für die mehreren Komponenten (14); (S4)
   - Ermitteln einer Differenz zwischen einer Summe der erfassten Leistungen und einem Leistungs-Sollwert; (S5) und
   - Bereitstellen eines jeweiligen Steuersignals, welches von der Differenz und der Flexibilität abhängt, durch die Steuerungseinrichtung (26) für wenigstens eine der Komponenten (14), wobei das Steuersignals dazu dient, einen Energieaustausch und/oder eine Energieregulierung über das Energienetz (12) zu initiieren. (S6)

2. Verfahren nach Anspruch 1, **dadurch gekennzeichnet, dass** das Bestimmen der Auslastung mittels Methoden eines Optimierungsproblems gelöst wird.

3. Verfahren nach Anspruch 1 oder 2, **dadurch gekennzeichnet, dass** der jeweilige Angebotswert einen oberen Grenzwert und/oder unteren Grenzwert für die Energiemenge und/oder einen Kapazitätswert und/oder einen Wirkungsgradwert und/oder eine Zeitfunktion und/oder einen Gegenwert umfasst.

4. Verfahren nach einem der vorhergehenden Ansprüche, **dadurch gekennzeichnet, dass** ein Lieferwert anhand der möglichen Auslastung für das zweite Zeitintervall bestimmt wird.

5. Verfahren nach Anspruch 4, **dadurch gekennzeichnet, dass** das jeweiligen Steuersignals (38) in Abhängigkeit von dem Lieferwert und/oder von der Flexibilität wenigstens einer der Anlagen (16) wenigstens einer der Komponenten (14) bereitgestellt wird.

6. Verfahren nach einem der vorhergehenden Ansprüche, **dadurch gekennzeichnet, dass** die jeweilige Komponente (14) ein Energiemanagementsystem (32) aufweist, durch welches der jeweilige Angebotswert und/oder eine Wert für die tatsächliche Leistung bereitgestellt wird.

7.  Verfahren nach einem der vorhergehenden Ansprüche, **dadurch gekennzeichnet, dass** der Umgebungswert eine Restriktion wenigstens einer der Anlagen (16) einer der Komponente (14) und/oder des Energienetzes (12) und/oder der Komponenten (14) umfasst.

8.  Verfahren nach einem der vorhergehenden Ansprüche, **dadurch gekennzeichnet, dass** das Energiesystem eine Messeinrichtung (30) umfasst, welche insbesondere einer Wandlereinrichtung zugeordnet ist.

9.  Verfahren nach einem der vorhergehenden Ansprüche, **dadurch gekennzeichnet, dass** das Energiesystem (10) über eine Schnittstelle (36) mit einem Verteilernetz verbunden ist und die über die Schnittstelle (36) übertragbare Leistung beim Ermitteln des Flexibilitätswert und/oder für den Sollwert einbezogen wird.

10. Computerprogramm, welches direkt in einen Speicher einer elektronischen Recheneinrichtung ladbar ist, mit Programmmitteln, um die Schritte des Verfahrens nach einem der Ansprüche 1 bis 9 auszuführen, wenn das Programm in der elektronischen Recheneinrichtung ausgeführt wird.

11. Elektronisch lesbarer Datenträger mit darauf gespeicherten elektronisch lesbaren Steuerinformationen, welche zumindest ein Computerprogramm nach Anspruch 10 umfassen und derart ausgestaltet sind, dass sie bei Verwendung des Datenträgers in einer elektronischen Recheneinrichtung ein Verfahren nach einem der Ansprüche 1 bis 9 durchführen.

FIG 1

FIG 2

FIG 3

$P_{soll}$ → ⊕ $P_{mess}$ → [ 40 ] → $P_{flex}$ ⟨ $P_{flex, 1}$ → [ 16 ] | [ 16 ] ← $P_{flex, n}$ ⟩ → ⊕ → $P_{mess}$

FIG 4

P ... $P_{soll}$ ... $P_{ist}$ ... t → P ... $P_{soll}$ ... $P_{ist}$ ... t

# EUROPÄISCHER RECHERCHENBERICHT

**Nummer der Anmeldung**

**EP 22 17 5508**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 208747 A1 (SIEMENS AG [DE]) 20. Januar 2022 (2022-01-20) | 1-8,10, 11 | INV. H02J3/14 |
| Y | * Absätze [0001], [0035], [0037] – [0039], [0049], [0061], [0062], [0065], [0068] – [0070]; Abbildung 1 * ----- | 9 | H02J3/38 G06Q30/06 G06Q50/06 |
| Y | DE 10 2018 213705 A1 (SIEMENS AG [DE]) 20. Februar 2020 (2020-02-20) * Absatz [0051] * ----- | 9 | ADD. H02J3/00 H02J3/32 H02J13/00 |

**RECHERCHIERTE SACHGEBIETE (IPC)**

H02J
G06Q

Der vorliegende Recherchenbericht wurde für alle Patentansprüche erstellt

| Recherchenort | Abschlußdatum der Recherche | Prüfer |
|---|---|---|
| **München** | **3. November 2022** | **Sulic, Tomislav** |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 5508

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2022

| Im Recherchenbericht angeführtes Patentdokument | Datum der Veröffentlichung | Mitglied(er) der Patentfamilie | Datum der Veröffentlichung |
|---|---|---|---|
| DE 102020208747 A1 | 20-01-2022 | DE 102020208747 A1<br>WO 2022012933 A1 | 20-01-2022<br>20-01-2022 |
| DE 102018213705 A1 | 20-02-2020 | DE 102018213705 A1<br>WO 2020035346 A1 | 20-02-2020<br>20-02-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018221156 A1